# FASCICULE DE BREVET EUROPEEN

(11) **EP 3 914 820 B1**
(45) Date de publication et mention de la délivrance du brevet: **28.02.2024**
(21) Numéro de dépôt: 20705427.1
(22) Date de dépôt: 22.01.2020
(51) Int. Cl.: F02C 7/045, F02K 1/82

(54) **DISPOSITIF DE RÉDUCTION DE BRUIT AVEC STRUCTURE EN NID D'ABEILLE À PERÇAGE OBLIQUE**
GERÄUSCHVERMINDERUNGSVORRICHTUNG MIT EINER SCHRÄG DURCHGESTOCHENEN WABENSTRUKTUR
NOISE REDUCING DEVICE HAVING AN OBLIQUELY PIERCED HONEYCOMB STRUCTURE

(30) Priorité: 22.01.2019 FR 1900548
(43) Date de publication de la demande: 01.12.2021
(73) Titulaire: SAFRAN AIRCRAFT ENGINES, 75015 Paris (FR)
(72) Inventeur: PAPIN, Thierry, Georges, Paul, 77550 MOISSY-CRAMAYEL (FR)
(74) Mandataire: Gevers & Orès
(86) Numéro de dépôt international: PCT/FR2020/050078
(87) Numéro de publication internationale: WO 2020/152418

(56) Documents cités:
- FR-A1- 2 220 079
- FR-A1- 2 938 014
- FR-A1- 3 012 067

## Description

### Domaine technique de l'invention

La présente invention est relative au domaine de la réduction de bruit dans un moteur d'aéronef.

### Arrière-plan technique

Les moteurs de turbines à gaz, tels que ceux qui alimentent les aéronefs, comprennent généralement des structures de suppression du bruit, notamment du bruit de soufflante. Ces structures sont généralement composées d'une pluralité de structures cellulaires formées de cloisons définissant des cavités. Ces cellules sont souvent disposées en un réseau, tel qu'un réseau ressemblant à une pluralité de cellules en forme de « nid d'abeilles ».

Ces structures sont classiquement situées dans la nacelle du moteur, en aval de la soufflante.

Dans le cadre du développement de nacelles fines et courtes, les surfaces disponibles pour un éventuel traitement acoustique sont de plus en plus faibles. Il y a donc de moins en moins de place pour installer les équipements, en particulier les panneaux acoustiques servant à atténuer le bruit de la soufflante. Ainsi, le volume et l'intégration des équipements deviennent des problématiques majeures, en particulier l'installation de panneaux acoustiques dans la veine secondaire du moteur.

Techniquement, pour réaliser une isolation acoustique efficace, la mise en oeuvre doit se faire en respectant le principe dit « masse/ressort/masse » : deux masses sont séparées par un ressort, par exemple une lame et un isolant. Entre les deux masses, le ressort atténue l'énergie du son et sert ainsi d'amortisseur de bruit.

La présente invention a notamment pour objectif de fournir un équipement de traitement acoustique permettant de diminuer les épaisseurs des panneaux acoustiques tout en conservant la même efficacité.

Des dispositifs de réduction de bruit de turbomachine d'aéronef sont connus des documents FR 2 938 014 et FR 3 012 067.

### Résumé de l'invention

On parvient à réaliser cet objectif, conformément à l'invention, grâce à un dispositif de réduction de bruit pour une turbomachine d'aéronef, selon la revendication 1, ce dispositif présentant une structure en empilement de couches, de manière à ce qu'une première et une seconde peaux en matériau composite forment une première et une seconde couches extérieures, les première et seconde couches extérieures étant sensiblement parallèles entre elles, les première et seconde couches extérieures enserrant une couche centrale présentant une structure en nid d'abeille comportant des cloisons s'étendant transversalement de la première couche extérieure vers la seconde couche extérieure, de manière à former des cavités. Ce dispositif se caractérise en ce que les cloisons de la structure en nid d'abeille de la couche centrale sont réalisée en matériau viscoélastique, en ce que lesdites cloisons forment, avec les première et seconde couches extérieures, un angle d'inclinaison aigu, par exemple compris entre 10 degrés et 80 degrés, et en ce que chaque cloison de la couche centrale présente une épaisseur comprise entre 3 mm et 7 mm.

Ainsi, on diminue l'épaisseurs des panneaux acoustiques tout en conservant la même efficacité. En diminuant les épaisseurs des panneaux acoustiques, on diminue les diamètres des carters. La diminution de ces diamètres permet de diminuer celui de la nacelle dans son ensemble. L'ensemble de ces diminutions de diamètres permet un gain de masse globale sur l'ensemble du moteur.

Le dispositif selon l'invention peut comprendre une ou plusieurs des caractéristiques suivantes, prises isolément les unes des autres ou en combinaison les unes avec les autres :
- les cloisons de la couche centrale sont planes et présentent toutes le même angle d'inclinaison avec la première et la seconde couches externes, cet angle d'inclinaison étant compris entre 10 degrés et 50 degrés, en étant par exemple un angle aigu entre 10 degrés et 30 degrés.,
- le matériau viscoélastique est une mousse organique,
- le matériau viscoélastique est une mousse métallique,
- la couche centrale présente une épaisseur comprise entre 20 et 30mm, et de préférence de 25mm,
- les cavités de la couche centrale présentent une profondeur de 40mm.

L'invention a également pour objet un carter externe de module de soufflante comportant un dispositif tel que défini précédemment par exemple prévu pour être disposé immédiatement en amont ou immédiatement en aval de la soufflante en considérant l'amont et l'aval par rapport au flux d'air traversant une turbomachine pourvue d'une soufflante.

L'invention a également pour objet un procédé de fabrication d'un dispositif, selon la revendication 8, tel que décrit ci-dessus, caractérisé en ce qu'il comprend une étape dans laquelle les cavités sont réalisées dans la couche centrale par perçage d'un panneau de matériau viscoélastique plein.

Le procédé selon l'invention peut comprendre une ou plusieurs des caractéristiques suivantes, prises isolément les unes des autres ou en combinaison les unes avec les autres :
- le panneau de matériau viscoélastique présente deux surfaces sensiblement parallèles entre elles, le perçage étant réalisé de manière oblique, de manière à ce que chaque cavité présente une hauteur s'inscrivant dans un plan non perpendiculaire aux surfaces du panneau.

Le procédé comporte en outre les étapes suivantes :
- fixation d'une première peau en matériau composite sur une première surface du panneau de matériau viscoélastique percé,
- fixation d'une deuxième peau en matériau composite sur une deuxième surface du panneau de matériau viscoélastique percé, et
- réalisation de perforation sur la première peau en matériau composite.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique et en coupe axiale d'une entrée de moteur d'aéronef, illustrant les zones de traitement acoustique,
[Fig. 2] La figure 2 est une vue en perspective d'un exemple de dispositif de de réduction de bruit comportant une couche centrale en nid d'abeille selon l'état de la technique,
[Fig. 3] La figure 3 est une vue en coupe transversale schématique d'une structure en nid d'abeille selon l'état de la technique,
[Fig. 4] La figure 4 est une vue en coupe transversale schématique d'une structure en nid d'abeille selon la présente invention.

### Description détaillée de l'invention

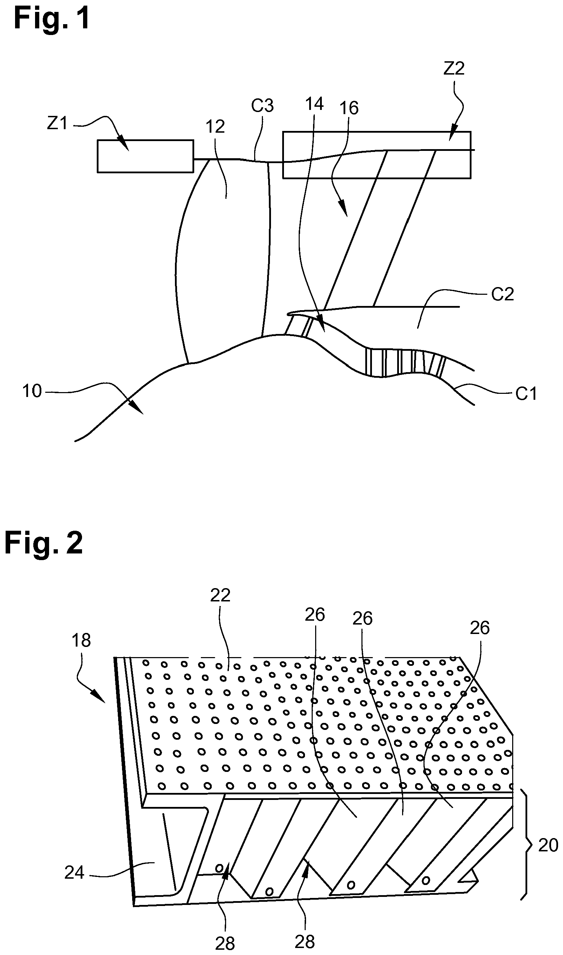

Sur la figure 1 on voit schématiquement représentée une coupe d'entrée de turbomachine d'aéronef comportant classiquement, un générateur de gaz 10 entouré d'un carter interne C1, une soufflante 12, une veine primaire 14 et une veine secondaire 16 séparées par un carter intermédiaire C2. La veine primaire 14 est ainsi délimitée par le carter interne C1 et le carter intermédiaire C2. La veine secondaire 16 est délimitée par le carter intermédiaire C2 et un carter externe C3 de module de soufflante. Ce carter externe C3 fait partie des composants de la nacelle de l'aéronef. Le carter C3 entoure au moins partiellement la soufflante 12.

Comme illustré sur la figure 1, on voit que le carter externe C3 comporte deux zones de traitement acoustique Z1, Z2. La première zone de traitement acoustique Z1 se situe en amont de la soufflante. La deuxième zone de traitement acoustique Z2 se situe en aval de la soufflante 12. L'amont et l'aval sont définis dans la présente demande selon le sens de circulation des gaz dans la turbomachine.

Une zone de traitement acoustique Z1, Z2 comporte principalement un panneau acoustique formant dispositif de réduction de bruit 18 (voir figure 2). Ce dispositif 18 présente classiquement une structure en empilement de couches 20, 22, 24.

Les principaux critères permettant un traitement acoustique optimal sont la surface et la distance parcourue par l'onde sonore à atténuer dans une cavité. La plage fréquentielle ciblée s'étend classiquement de 400 à 4KHz pour un moteur du type « *Ultra High By Pass Patio »* (UHBR) classiquement utilisé par la déposante.

Comme illustré sur la figure 2, le dispositif de réduction de bruit 18 selon l'invention présente une couche centrale 20 formant coeur. Cette couche centrale 20 formant une structure dite en nid d'abeille. Cette couche centrale 20 présente classiquement une épaisseur E d'une cinquantaine de millimètres. Elle est classiquement composé de matériau de type mousse (organique ou métallique) ou autre matériau viscoélastique. Ladite couche centrale 20 est, comme visible sur la figure 2, prise en sandwich entre qu'une première et une seconde peaux 22, 24 en matériau composite carbone ou verre. Ces deux peaux 22, 24 forment respectivement une première et une seconde couches extérieures 22, 24 du dispositif 18. Les première et seconde couches extérieures 22, 24 sont sensiblement parallèles entre elles et enserrent la couche centrale 20. La structure en nid d'abeille de la couche centrale 20 est réalisée au moyen de cloisons 26 planes, toutes sensiblement parallèles entre elles, s'étendant transversalement de la première couche extérieure 22 vers la seconde couche extérieure 24. Ces cloisons planes 26 sont positionnées au contact les unes des autres, via leurs arêtes, de manière à former, avec les deux peaux 22, 24 des cavités 28 homogènes.

Le dispositif 18 étant intégré à la nacelle de l'aéronef, la première couche extérieure (peau interne) 22 est au contact de l'air circulant à l'intérieur de la veine secondaire 16 et la deuxième couche extérieure (peau externe) 24 est au contact avec l'air circulant autour de la nacelle.

Pour associer la fonction acoustique désirée (réduction de bruit) au dispositif 18 et permettre à l'air circulant dans la veine secondaire 16 de pénétrer la couche centrale 20, on réalise des perforations dans la peau interne 22. Ces ouvertures présentent typiquement un diamètre D de 5mm.

Afin d'obtenir des bonnes performances acoustiques, il est classique d'opter pour un taux de perforation de la peau interne 22 compris entre 5 et 12%. Ce taux est de préférence de l'ordre de 10 %. L'air est ainsi entraîné dans la couche centrale 20 et le son produit s'en trouve diminué. En effet, les cloisons 26 forment les cavités 28 dites cavités résonnantes. Sous l'effet du passage de l'air, les cloisons 26 desdites cavités 28 vibrent et, si les dimensions sont bien calculées, entrent en résonnance.

L'accord en fréquence, c'est-à-dire l'optimisation qui permet d'atteindre une dissipation maximale des fréquences à atténuer, se fait majoritairement via modulation du volume des cavités 28 résonantes. Les caractéristiques géométriques des cloisons 26 sont donc définies en fonction des performances acoustiques ciblées.

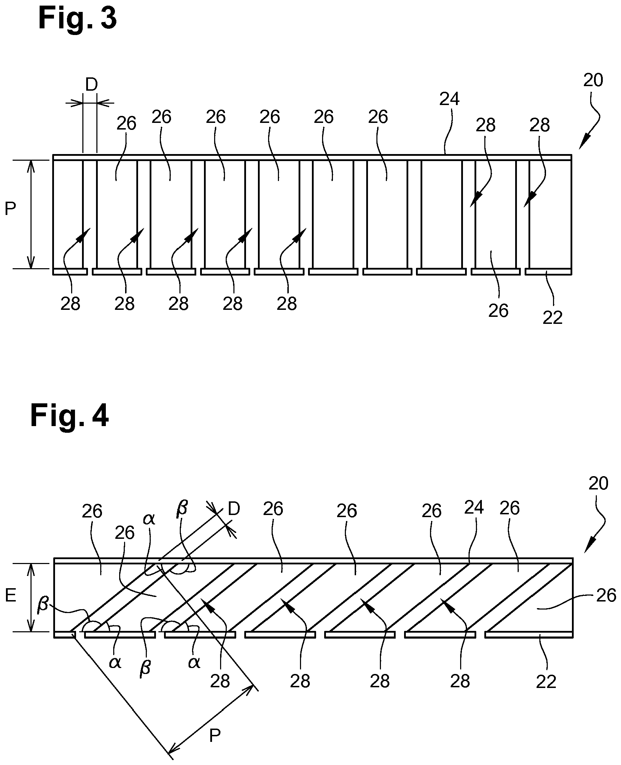

Classiquement, dans l'état de la technique, les cavités 28 présentent une profondeur P de l'ordre de 40mm pour l'application ciblée, comme visible sur la figure 3. La profondeur P est définie dans la présente demande comme la longueur d'une cloison 26, c'est-à-dire la distance séparant les deux couches extérieures 22, 24 du dispositif 18 selon un axe sensiblement parallèle auxdites cloisons 26. Dans l'état de la technique (voir figure 3), ces cloisons planes 26 s'étendent perpendiculaires entre les peaux interne et externes 22, 24. La profondeur P des cavités 28 se confond ainsi avec la hauteur du dispositif 18, comme visible sur les figures 2 et 4.

L'invention propose de diminuer l'épaisseur des zones de traitement acoustique Z1, Z2. Comme visible sur la figure 4, les cloisons 26 ne s'étendent transversalement entre les première et seconde couches extérieures 22, 24. Les cloisons 26 ne s'étendent pas perpendiculairement entre les première et seconde couches extérieures 22, 24. En particulier, les cloisons 26 forment, avec les couches extérieures 22, 24, un angle d'inclinaison aigu α.

Il est évident que tout angle aigu α entre la première face de la cloison 26 et les couches extérieures 22, 24 implique la présence d'un angle obtus β entre la deuxième face de la cloison 26 et les couches extérieures 22, 24, comme visible sur la figure 4.

Les cloisons 26 de la couche centrale 20 présentent ainsi toutes le même angle d'inclinaison α avec la première et la seconde couches externes 22, 24. Cet angle d'inclinaison α est aigu, par exemple en étant compris entre 10 degrés et 80 degrés. Des résultats performant sont obtenus en considérant, par exemple, un angle aigu entre 10 degrés et 50 degrés. Les valeurs d'angles plus proche de 10 degrés que de 50 degrés sont considérées préférentiellement.

Chaque cloison 26 de la couche centrale 20 présente une épaisseur comprise entre 3 et 7mm, et préférence de 5mm. Comme visible sur la figure 4, la couche centrale 20 présente une épaisseur E comprise entre 20 et 30mm, de préférence de 25mm. Toutefois, les cloisons 26 ne formant plus, avec les peaux 22, 24, d'angle droit, l'épaisseur E de la couche centrale 20 ne se confond plus avec la profondeur P des cavités 28. En effet, la profondeur P des cavités 28, c'est-à-dire la longueur des cloisons 26, est toujours sensiblement de 40mm. Les caractéristiques acoustiques du dispositif 18 n'ont donc pas été modifiées bien que la hauteur globale du dispositif 18 aie été réduite d'un facteur de l'ordre de 1,6. On conserve donc un équivalent de réduction de bruit dans une épaisseur E amoindrie. Ceci permet également de réduire le diamètre du carter externe C3 de soufflante et donc la nacelle de l'aéronef. La réduction en taille de la nacelle de l'aéronef permet de diminuer la traînée et la masse dudit aéronef.

La structure en nid d'abeille de la couche centrale 20 est réalisée en matériau viscoélastique. Ce matériau viscoélastique peut, par exemple être une mousse organique ou une mousse métallique.

Cette structure en nid d'abeille inclinée est obtenue au moyen d'un procédé appliqué sur un panneau de matériau viscoélastique (mousse organique ou métallique, par exemple) plein. Ce panneau plein présente deux surfaces sensiblement parallèles entre elles. La hauteur du panneau plein est sensiblement de 25mm. Le panneau plein est destiné à former la couche centrale 20.

Le matériau viscoélastique peut comprendre un polymère. Un exemple de polymère peut être un polyuréthane, un polyester, un polyépoxyde, un polypropylène, ou encore un polyméthacrylimide.

Les mousses viscoélastiques (notamment en polymère) peuvent résister (maintenir leurs formes) à des températures comprises entre 100°C et 200°C. Le module élastique peut être compris entre 70 et 200 Mpa (sous ISO 527-2).

Le procédé comporte ici cinq étapes listées ci-dessous :
- réalisation des cavités 28 de la couche centrale 20 par perçage oblique dans le panneau plein,
- fixation d'une première peau 22 en matériau composite sur la première surface du panneau percé,
- fixation d'une deuxième peau 24 en matériau composite sur la deuxième surface du panneau de matériau percé, et
- réalisation de perforation sur la première peau en matériau composite 22.

Le perçage du panneau plein est réalisé de manière oblique, de manière à ce que chaque cavité 28 présente une hauteur s'inscrivant dans un plan non perpendiculaire aux surfaces du panneau.

L'étape de perçage peut être réalisée au moyen de canons de perçages pouvant servir de guide afin de respecter l'angle d'inclinaison α choisi.

La profondeur P des perçages réalisés est basée sur la longueur équivalente aux performances de l'application attendue, ici 40mm.

Ainsi, grâce à ce procédé de perçage de mousse, la personne du métier a une très grande liberté dans le choix à la fois de l'angle d'inclinaison α et de la longueur des cloisons 26. En effet, une fois le modèle acoustique modélisé, le perçage du panneau peut être réalisé facilement avec une précision satisfaisante. Le procédé selon la présente invention permet de s'affranchir des difficultés liées à l'assemblage d'une structure en nid d'abeille inclinée. Il ne reste ensuite plus qu'à ajouter les couches extérieures 22, 24 et à perforer la couche extérieure interne 22 et le dispositif 18 est fonctionnel. On observe ainsi, en plus du gain de place grâce à la hauteur des panneaux, du gain de masse grâce au diamètre réduit du carter externe, du gain en masse et en traînée de l'aéronef grâce à la diminution des surfaces externes de la nacelle, un gain de temps lors de la fabrication du dispositif 18.

## Revendications

1. Dispositif (18) de réduction de bruit pour une turbomachine d'aéronef, ce dispositif présentant une structure en empilement de couches (20, 22, 24), de manière à ce qu'une première et une seconde peaux (22, 24) en matériau composite forment une première et une seconde couches extérieures (22, 24), les première et seconde couches extérieures (22, 24) étant sensiblement parallèles entre elles, les première et seconde couches extérieures (22, 24) enserrant une couche centrale (20) présentant une structure en nid d'abeille comportant des cloisons (26) s'étendant transversalement de la première couche extérieure (22) vers la seconde couche extérieure (24), de manière à former des cavités (28),
**caractérisé en ce que** les cloisons (26) de la structure en nid d'abeille de la couche centrale (20) sont réalisée en matériau viscoélastique, et **en ce que** lesdites cloisons (26) forment, avec les première et seconde couches extérieures (22, 24), un angle d'inclinaison aigu (α), chaque cloison (26) de la couche centrale (20) présentant une épaisseur comprise entre 3 mm et 7 mm.

2. Dispositif (18) selon la revendication précédente, **caractérisé en ce que** les cloisons (26) de la couche centrale (20) sont planes et présentent toutes le même angle d'inclinaison (α) avec la première et la seconde couches externes (22, 24), cet angle d'inclinaison (α) étant compris entre 10 degrés et 50 degrés.

3. Dispositif (18) selon l'une quelconque des revendications précédentes, **caractérisé en ce que** le matériau viscoélastique est une mousse organique.

4. Dispositif (18) selon l'une quelconque des revendications 1 ou 2, **caractérisé en ce que** le matériau viscoélastique est une mousse métallique.

5. Dispositif (18) selon l'une quelconque des revendications précédentes, **caractérisé en ce que** chaque cloison (26) de la couche centrale (20) présente une épaisseur de 5mm.

6. Dispositif (18) selon l'une quelconque des revendications précédentes, **caractérisé en ce que** la couche centrale (20) présente une épaisseur (E) comprise entre 20 et 30mm, et de préférence de 25mm.

7. Dispositif (18) selon l'une quelconque des revendications précédentes, **caractérisé en ce que** les cavités (28) de la couche centrale (20) présentent une profondeur (P) de 40mm.

8. Procédé de fabrication d'un dispositif (18) selon l'une quelconque des revendications précédentes, **caractérisé en ce qu'**il comprend une étape dans laquelle les cavités (28) sont réalisées dans la couche centrale (20) par perçage d'un panneau de matériau viscoélastique plein.

9. Procédé selon la revendication précédente, **caractérisé en ce que** le panneau de matériau viscoélastique présente deux surfaces sensiblement parallèles entre elles, le perçage étant réalisé de manière oblique, de manière à ce que chaque cavité (28) présente une hauteur s'inscrivant dans un plan non perpendiculaire aux surfaces du panneau.

10. Procédé selon la revendication 8 ou 9, **caractérisé en ce que** le procédé comporte en outre les étapes suivantes :
- fixation d'une première peau (22) en matériau composite sur une première surface du panneau de matériau viscoélastique percé,
- fixation d'une deuxième peau (24) en matériau composite sur une deuxième surface du panneau de matériau viscoélastique percé, et
- réalisation de perforation sur la première peau (22) en matériau composite.

## Patentansprüche

1. Vorrichtung (18) zur Geräuschverminderung für ein Turbotriebwerk eines Luftfahrzeugs, wobei diese Vorrichtung eine Struktur aus einer Stapelung von Schichten (20, 22, 24) aufweist, sodass eine erste und eine zweite Haut (22, 24) aus Verbundwerkstoff eine erste und eine zweite Außenschicht (22, 24) bilden, wobei die erste und zweite Außenschicht (22, 24) im Wesentlichen parallel zueinander sind, die erste und zweite Außenschicht (22, 24) eine Mittelschicht (20) einschließen, die eine Wabenstruktur aufweist, die Wände (26) beinhaltet, die sich quer zur ersten Außenschicht (22) zur zweiten Außenschicht (24) erstrecken, um Hohlräume (28) zu bilden,
**dadurch gekennzeichnet, dass** die Wände (26) der Wabenstruktur der Mittelschicht (20) aus viskoelastischem Werkstoff hergestellt sind, und dadurch, dass die Wände (26) mit der ersten und zweiten Außenschicht (22, 24) einen spitzen Neigungswinkel (a) bilden, wobei jede Wand (26) der Mittelschicht (20) eine Dicke aufweist, die zwischen 3 mm und 7 mm liegt.

2. Vorrichtung (18) nach dem vorstehenden Anspruch, **dadurch gekennzeichnet, dass** die Wände (26) der Mittelschicht (20) eben sind und allesamt den gleichen Neigungswinkel (a) mit der ersten und zweiten Außenschicht (22, 24) aufweisen, wobei dieser Neigungswinkel (a) zwischen 10 Grad und 50 Grad liegt.

3. Vorrichtung (18) nach einem der vorstehenden Ansprüche, **dadurch gekennzeichnet, dass** der viskoelastische Werkstoff ein organischer Schaumstoff ist.

4. Vorrichtung (18) nach einem der Ansprüche 1 oder 2, **dadurch gekennzeichnet, dass** der viskoelastische Werkstoff ein metallischer Schaumstoff ist.

5. Vorrichtung (18) nach einem der vorstehenden Ansprüche, **dadurch gekennzeichnet, dass** jede Wand (26) der Mittelschicht (20) eine Dicke von 5 mm aufweist.

6. Vorrichtung (18) nach einem der vorstehenden Ansprüche, **dadurch gekennzeichnet, dass** die Mittelschicht (20) eine Dicke (E) aufweist, die zwischen 20 und 30 mm liegt, und vorzugsweise 25 mm beträgt.

7. Vorrichtung (18) nach einem der vorstehenden Ansprüche, **dadurch gekennzeichnet, dass** die Hohlräume (28) der Mittelschicht (20) eine Tiefe (P) von 40 mm aufweisen.

8. Verfahren zur Herstellung einer Vorrichtung (18) nach einem der vorstehenden Ansprüche, **dadurch gekennzeichnet, dass** es einen Schritt umfasst, bei dem die Hohlräume (28) in der Mittelschicht (20) durch Anbohren einer vollen Platte aus viskoelastischem Werkstoff realisiert werden.

9. Verfahren nach dem vorstehenden Anspruch, **dadurch gekennzeichnet, dass** die Platte aus viskoelastischem Werkstoff zwei im Wesentlichen parallel zueinander liegende Oberflächen aufweist, wobei das Anbohren schräg erfolgt, sodass jeder Hohlraum (28) eine Höhe aufweist, die sich in eine Ebene einschreibt, die nicht senkrecht zu den Oberflächen der Platte verläuft.

10. Verfahren nach Anspruch 8 oder 9, **dadurch gekennzeichnet, dass** das Verfahren weiter die folgenden Schritte beinhaltet:
- Befestigung einer ersten Haut (22) aus Verbundwerkstoff auf einer ersten Oberfläche der angebohrten Platte aus viskoelastischem Werkstoff,
- Befestigung einer zweiten Haut (24) aus Verbundwerkstoff auf einer zweiten Oberfläche der angebohrten Platte aus viskoelastischem Werkstoff, und
- Realisation des Anbohrens auf der ersten Haut (22) aus Verbundwerkstoff.

## Claims

1. A noise reducing device (18) for an aircraft turbine engine, this device having a structure in the form of a stack of layers (20, 22, 24) such that a first and a second skin (22, 24) made of composite material form a first and a second outer layers (22, 24), the first and second outer layers (22, 24) being substantially parallel to one another, the first and second outer layers (22, 24) enclosing a central layer (20) having a honeycomb structure comprising partitions (26) extending transversely from the first outer layer (22) to the second outer layer (24), so as to form cavities (28),
**characterized in that** the partitions (26) of the honeycomb structure of the central layer (20) are made of viscoelastic material, and **in that** said partitions (26) form, with the first and second outer layers (22, 24), an acute angle of inclination (α), each partition (26) of the central layer (20) has a thickness comprised between 3 and 7 mm.

2. The device (18) according to the preceding claim, **characterized in that** the partitions (26) of the central layer (20) are flat and all have the same angle of inclination (α) with the first and the second outer layers (22, 24), this angle of inclination (α) being comprised between 10 degrees and 50 degrees.

3. The device (18) according to any one of the preceding claims, **characterized in that** the viscoelastic material is an organic foam.

4. The device (18) according to any one of claims 1 or 2, **characterized in that** the viscoelastic material is a metallic foam.

5. The device (18) according to any of the preceding claims, **characterized in that** each partition (26) of the central layer (20) has a thickness of 5 mm.

6. The device (18) according to any of the preceding claims, **characterized in that** the central layer (20) has a thickness (E) comprised between 20 and 30 mm, and preferably 25 mm.

7. The device (18) according to any of the preceding claims, **characterized in that** the cavities (28) of the central layer (20) have a depth (P) of 40 mm.

8. A method for manufacturing a device (18) according to any one of the preceding claims, **characterized in that** it comprises a step in which the cavities (28) are made in the central layer (20) by piercing a solid panel of viscoelastic material.

9. The method according to the preceding claim, **characterized in that** the panel made of viscoelastic material has two surfaces substantially parallel to one another, the piercing being made obliquely, so that each cavity (28) has a height forming part of a plane which is not perpendicular to the surfaces of the panel.

10. The method according to claim 8 or 9, **characterized in that** the method further comprises the following steps:
- fixing a first skin (22) made of composite material to a first surface of the pierced viscoelastic material panel,
- fixing a second skin (24) made of composite material to a second surface of the pierced viscoelastic material panel, and
- making perforation in the first skin (22) made of composite material.
